# EUROPEAN PATENT APPLICATION

(11) **EP 1 992 578 A2**
(43) Date of publication of application: **19.11.2008**
(21) Application number: 08251669.1
(22) Date of filing: 12.05.2008
(51) Int. Cl.: B65G 17/12

(54) **Driven track system**

(30) Priority: 17.05.2007 GB 0709483; 24.01.2008 GB 0801251
(71) Applicant: Hepco slide systems limited, Tiverton, Devon EX16 6TG (GB)
(72) Inventor: Fanshawe, Peter James Hepco Slide Systems Ltd., Tiverton Devon EX16 6TG (GB); Stockman, Barton Giles Montagu Hepco Slide Systems Ltd., Tiverton Devon EX16 6TG (GB)
(74) Representative: Craske, Stephen Allan

(57) **Abstract**

An endless track 2 incorporating one or more curved sections has a number of carriages 10 engaged with the track. Adjacent carriages 20 are joined by flexible and non-extensible links 20 to form an endless loop driven by a helical screw 30. The links 20 are formed from lengths of toothed belt of the kind incorporating metal strands encased within a polymeric material. The carriages 10 have compound leaf springs 60 which act on the inside of the associated links 20 to tension the links as the carriages move around curved sections of the track, and the leaf springs 60 are, in turn, supported by projecting noses 46, thereby achieving improved dynamics and higher operating speeds. The pitch of the carriages 10 can be adjusted by gripper blocks 49 and jacking screws. In further embodiments the flexible links may be chains, wire ropes or metal bands, and they may be tensioned by spring-loaded arms. Flexible or rigid links can also be attached to the carriages by compliant mountings which move laterally against spring loading.

## Description

### TECHNICAL FIELD OF THE INVENTION

This invention relates to driven track systems of the kind in which carriages are driven around a track in an endless loop.

### BACKGROUND

Such systems are currently used in a wide variety of applications which require the movement of articles along a pre-defined path in accurate registration with other mechanisms. Examples include letter sorting, printing, packaging, component picking, tool changers etc. Operations may be performed on the articles whilst they are on the move enabling slow processes to be carried out at a faster rate. The articles can also be moved intermittently if reliable and stable positioning is required at one or more points during the performance of an operation.

In an existing form of driven track system which has been in use for many years the carriages are driven individually by means of a flexible toothed drive belt which runs along one side of the track. The belt is driven by toothed wheels so that the belt moves the carriages around the track. Whilst such a system is capable of operating accurately and reliably at relatively low speeds it suffers from a number of disadvantages. For example, the system is not suitable for moving heavy loads, and is limited to relatively low speed applications. The connections between the belt and the carriages may be a weak point where failures may occur. Furthermore, the dynamics of the system are not suitable for many uses since the carriages tend to accelerate as they enter curved sections of the track and decelerate as they enter straight sections.

In another existing form of driven track system the carriages are linked by rigid connecting rods which are pivotally coupled to the carriages. The carriages are provided with rollers which can be engaged by a drive screw or pneumatic indexing device located at a suitable position alongside the track. Thus, at any given time a proportion of the carriages are being actively driven while the remainder of the carriages are being indirectly driven via the adjacent carriages and links. Such an arrangement is generally stronger than the driven belt system described above, and there is less tendency for the carriages to change speed between the straight and curved sections. However, this system too has drawbacks. For example, the effective length of the link interconnecting two carriages can change with the position of the carriages on the track. This change in effective length needs to be accommodated, and this may be done by providing clearance in the linkage connections or compliance in the links, but this can affect the regular spacing of the carriages on straight portions of the track. Another serious problem is that there can be a substantial sideways reaction force on the carriages when adjacent links are positioned at substantially less than 180° to each other.

In a third form of driven track system which has been used in a small number of applications, the carriages are linked by a flexible metal band. The inherent resilience of the metal band causes it to act as a beam spring, maintaining tension between the carriages. However, a significant disadvantage of this system is that the band is subject to metal fatigue due to its continuous flexing, and although the carriages are provided with rigid curved guides to limit the amount of flexing at the point of connection to the carriages, the band is still prone to break in an unpredictable manner during use. In addition, such an arrangement is only used where the carriage spacing relative to the radius of curvature of the track is relatively small. As the relative carriage spacing increases there is a reduced ability of the system to accommodate carriage movements or adapt to variations due to tolerances, heat, wear etc.,

The present invention seeks to provide a new and inventive form of driven track system which is capable of significantly better dynamics than known systems without suffering from significant metal fatigue problems.

### SUMMARY OF THE INVENTION

The present invention proposes a driven track system having:
- an endless track incorporating one or more curved sections;
- a plurality of carriages engaged with the track such as to be capable of movement along the track;
- a plurality of non-extensible links each arranged to flexibly interconnect a pair of carriages such that the carriages and links form an endless loop; and
- drive means arranged to act on at least some of the carriages at any given time such as to move the interconnected carriages around the track;
*characterised in that*
the carriages are provided with resilient tensioning means arranged to act on the associated links such as to apply a tensioning force to each link transverse to the direction of movement as the carriages move around a curved portion of the track.

The important thing to note is that the loop is always in tension, but due to the action of the resilient means, the effective shortening of the total length of the loop occurs entirely on curved sections, maintaining a constant pitch of the carriages on straight sections of the track.

Two methods have been devised for smoothly varying the tension in the loop on curved sections of the track.

In one aspect of the invention the non-extensible links are flexible in a direction transverse to the track, and the resilient tensioning means act on the links, directly or indirectly, to deflect them transversely of the track. Generally, the resilient tensioning means will act to deflect the links in an outward direction relative to the curvature of the track, although inward deflection is conceivable.

In this first aspect of the invention each carriage may include a projecting element having a support face which is opposed to an associated link, and spring means acts on the projecting elements causing them, in turn, to act on the links to deflect them transversely of the track. The projecting elements may be pivotally secured to the associated carriage.

In another embodiment within the first aspect of the invention, the resilient means act directly on the links to deflect them in a direction transverse to the track. The resilient means may comprise at least one leaf spring, ideally a compound leaf spring assembly comprising a plurality of leaf springs. The leaf springs preferably become shorter away from the associated link such that one end of the leaf spring assembly is more resilient than the end adjacent to the associated carriage.

In another aspect of the invention the resilient tensioning means act on the associated links to permit their connections with the associated carriages to move transversely of the track. In this case the links may be rigid or flexible transversely of the track. The resilient tensioning means may include attachment elements, e.g. plungers, to which the links are fixed and which are constrained to move transversely of the track. The attachment elements may be disposed between oppositely-acting resilient elements.

### BRIEF DESCRIPTION OF THE DRAWINGS

The following description and the accompanying drawings referred to therein are included by way of non-limiting example in order to illustrate how the invention may be put into practice. In the drawings:
Figure 1 is a general view of a driven track system in accordance with the invention;
Figure 2 is a partly exploded detail of part of the driven track system;

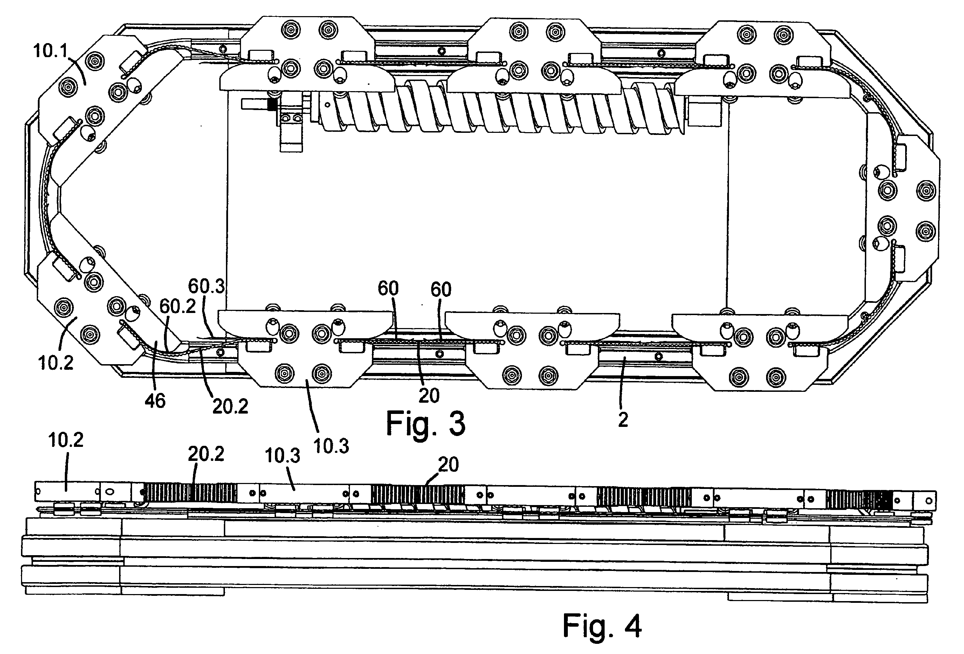

Figure 3 is a plan view of the driven track system;
Figure 4 is a side elevation of the driven track system;

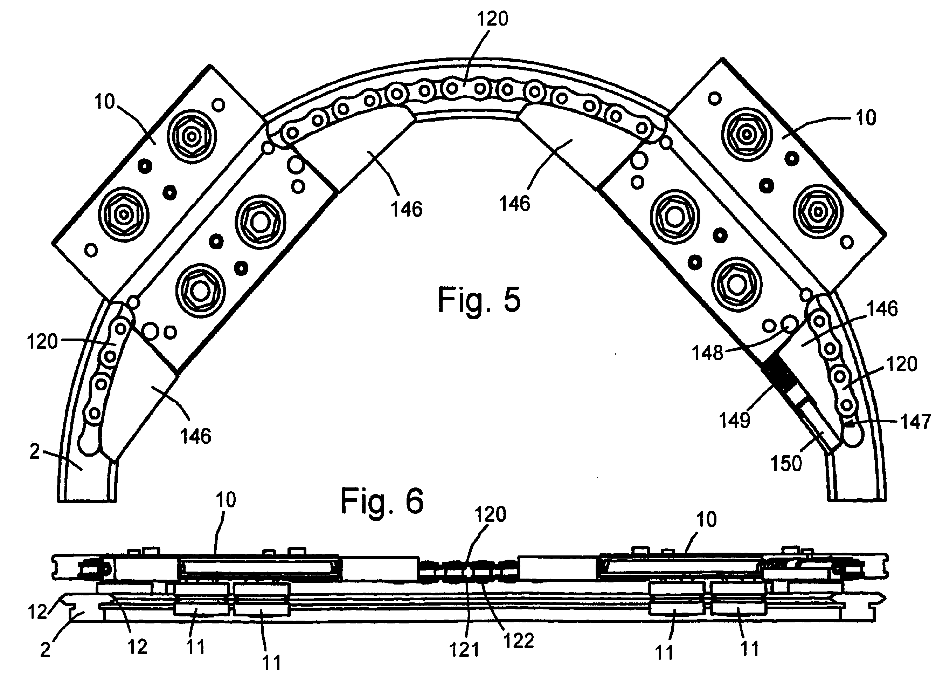

Figure 5 is a plan view of a curved portion of a second driven track system in accordance with the invention;
Figure 6 is a side elevation of the second driven track system;
Figure 7 is a plan view of a curved portion of a third driven track system in accordance with the invention;
Figure 8 is a general view of one of the carriages of the third driven track system; and
Figure 9 is a transverse section A-A through one end of a carriage shown in Fig. 7.

### DETAILED DESCRIPTION OF THE DRAWINGS

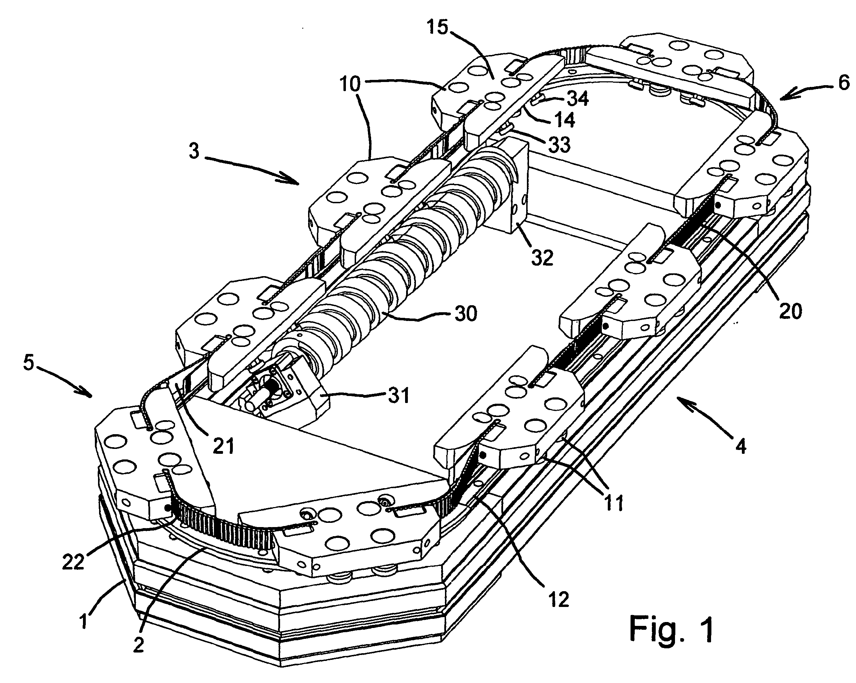

Referring firstly to **Fig. 1****,** the driven track system has a bed 1 of known form which supports an endless track 2 extending in a horizontal plane. In this example the track 2 has two straight and parallel sections 3 and 4 joined by two curved end sections 5 and 6, but the track may be of any suitable configuration depending on the particular application. A number of carriages 10 are engaged with the track 2 in such a way as to be capable of smooth guided movement along the track. In this example the underside of each carriage 10 is provided with opposing pairs of rotatable wheels 11 with V-shaped grooves engaged with V-shaped flanges 12 on opposite sides of the track 2, but again, any suitable form of engagement may be used. Adjacent carriages are interconnected by means of a length of belt 20 forming a flexible and non-extensible link between the adjacent carriages, such that the carriages 10 and links 20 form an endless loop. The lengths of belt 20 may be of the kind used in accurate timing applications, incorporating a number of longitudinally-extending metal strands encapsulated within a polymeric material. One face 21 of the links 20 facing towards the inside of the track 2 is smooth whilst the opposite outer face 22 is formed with alternating ribs and grooves forming a series of teeth extending transversely of the belt. As well as increasing the flexibility of the belt, the teeth assist in the attachment and accurate adjustment of the links 20 with respect to the carriages 10, as will be explained further below.

It is worth noting that other flexible but inextensible elements may be used for the connecting links. For example, chains and non-encapsulated wire ropes have been tried successfully. Other examples include flexible metal bands as well as belts and ropes with non-metallic cores such as Kevlar.

Drive to the carriages is provided by means of a helical screw 30 which is mounted alongside the track 2. The screw is journalled in suitable end bearings 31 and 32 to rotate about an axis which extends parallel to the straight section 3. The screw 30 may be driven by an electric motor (not shown) in any convenient manner. As the carriages 10 enter the straight section 3 pick-up rollers 33 and 34 mounted on each carriage become engaged with the screw 30 so that, as the screw rotates, the interlinked carriages are caused to move along the track. In this example each carriage has a pair of pick-up rollers 33, 34, which are suitably positioned and spaced such that they may both engage the screw 30 at the same time. Furthermore, the length of the screw 30 is such that the pick-up rollers of at least two adjacent carriages are always engaged with the screw to ensure that smooth continuous drive is obtained. The pick-up rollers 33 and 34 are mounted on an inner, downwardly inclined face 14 of the carriage, which enables the screw 30 to be positioned wholly below the top face 15 of the carriage so as not to restrict the space for mounting items on the carriage. It will however be appreciated that the number and positioning of the pick-up rollers may vary, depending on the application.

In addition, other known means of moving the carriages may be employed, such as hydraulic pushers or cam wheels for example.

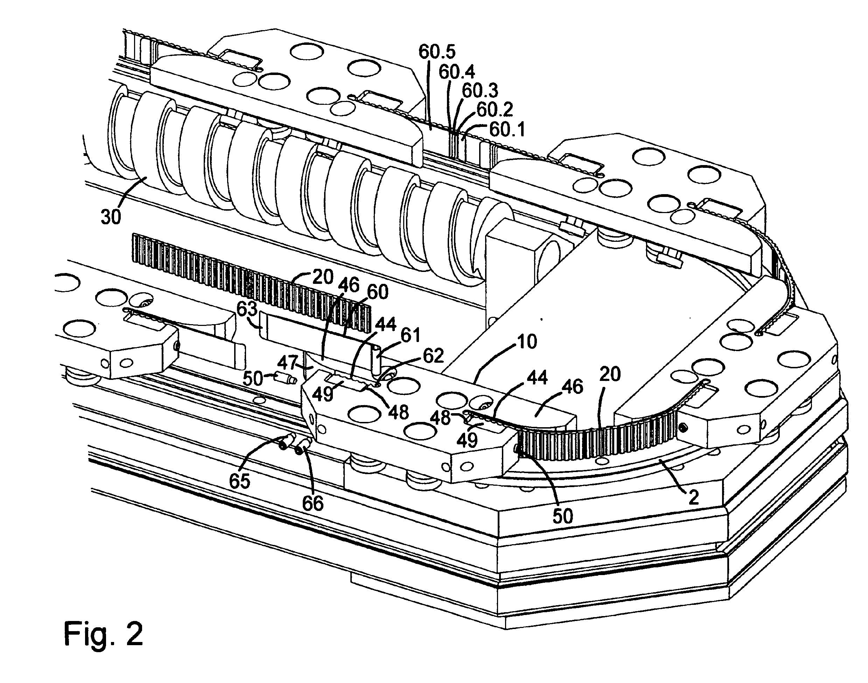

Referring to **Fig. 2**, opposite ends of the carriages 10 are provided with a pair of aligned vertical slots 44 to receive the links 20, positioned above the inner margin of the track 2. In addition, the ends of the carriages are provided with projecting noses 46 which provide a convex support face 47 leading from the respective slot 44 and curving inwards with a smooth profile. The outside face of each slot 44 is provided with a recess 48 in which a gripper block 49 is received. The gripper blocks 49 can be adjusted longitudinally of the slots 44 by means of jacking screws 50, and the gripper blocks are engaged with the toothed external faces of the links 20 by means of corresponding transverse ribs and grooves. Thus, by adjusting the position of the gripper blocks 49 using the screws 50 the links 20 can be moved in and out of the respective slots 44. This provides a convenient and accurate way of adjusting the pitch of the carriages 10 to ensure accurate registration of the adjacent carriages with the drive screw 30.

A compound leaf spring assembly 60 is also mounted within each slot 44 in contact with the smooth inner face 21 of the link 20. The leaf spring assembly may be located within the slot by means of a rolled end 61, or similar end projection, which is received in a corresponding enlargement 62 at the blind end of the slot. The compound leaf springs are of elongate shape, extending beyond the noses 46, and being of substantially the same transverse width as the links 20. Each leaf spring assembly 60 comprises a group of individual leaf springs, there being five such springs in this example. The spring 60.1 immediately adjacent to the link 20 is the longest of the group, having its free end 63 angled inwards away from the link to prevent wear due to contact between the end of the spring and the surface of the belt. The four remaining leaf springs, 60.2 to 60.5, are progressively shorter so that the stiffness of the compound spring increases from its free end towards its root. This is an important property of the spring assembly which materially assists in providing the system with the desired dynamic characteristics.

When the pitch of the carriages has been adjusted by means of the jacking screws 50 the whole assembly can be locked by means of clamping screws 65 and 66 which are inserted through threaded bores to urge the gripper blocks 49 against the links 20.

The way in which the links move in order to maintain the dynamic relative positioning of the carriages can best be seen by reference to **Fig.s 3 and 4**. As the carriages 10 move along the straight sections of the track 2 the lengths of belt forming the links 20 are substantially straight, extending along the inside margin of the track 2. The compound leaf springs 60 also attain a substantially straight configuration alongside the inside faces of the links, so that they exert no significant effect on the links. However, as the leading carriage 10.2 enters one of the curved end sections of the track the compound leaf spring 60.2, partially supported by the projecting nose 46, causes the link 20.2 to curve smoothly towards the outside margin of the track 2 in a shallow S-shape, as shown. It will be noted that at this stage the compound leaf spring 60.3 of the trailing carriage 10.3 still has no affect on the associated link 20.2, but as the trailing carriage enters the curve the associated compound leaf spring will also urge the adjacent end of the link out towards the outer margin of the track, as shown in the case of the link joining the carriages 10.1 and 10.2.

The combined effect is that the loop is always held in tension and accurate spacing is maintained between adjacent carriages as they travel along straight portions of the track. On curved sections an effective but smooth and accurate reduction in the spacing between the carriages takes place, but without developing high lateral forces on the carriages. Such desirable dynamic characteristics would be very difficult to achieve using the links alone without external tensioning means. It should be noted that whilst the profiled noses may help to control and limit the development of stresses in the links adjacent to the carriages this could be achieved using suitably designed leaf springs without support noses. The improved dynamics of the system allow considerably higher speed to be attained with a very low risk of fatigue failure in the system.

Although the above example uses a track having inward bends only it would be possible to construct a similar system incorporating outward bends by providing duplicate pairs of compound leaf springs and support noses on opposite sides of the links. Furthermore, although compound leaf springs are a convenient and effective way of achieving the desired dynamic tensioning characteristics it would also be possible to obtain improved characteristics using different resilient arrangements to tension the flexible links.

In the embodiment of **Fig.s 5 and 6** dynamic tensioning characteristics are achieved by compression springs which act indirectly on the flexible links via pivoted tensioning arms. The driven track system has an endless track 2 extending in a horizontal plane, only a curved portion of which is shown. A number of carriages 10 are engaged with the track 2 by means of opposing pairs of rotatable wheels 11 with V-shaped grooves, which are engaged with V-shaped flanges 12 on opposite sides of the track 2. The carriages are interconnected by lengths of chain 120 which are pivotally coupled to opposite ends of the carriages 10 above the track 2 such that the carriages 10 and links 120 form an endless loop. In this example the chain 120 comprises spaced pairs of short rigid plates 121 which are joined by pivots 122, forming flexible and non-extensible links between the adjacent carriages. Other flexible but inextensible elements may be used for the connecting links such as flexible belts, metal bands, or wire ropes.

The carriages are driven to move along the track, e.g. by a helical screw, hydraulic pushers, cam wheels or other suitable means, not shown.

The opposite ends of the carriages 10 are provided with projecting tensioning arms 146 which each have a convex outer guide face 147 leading from the root of the link 120 adjacent to the respective carriage 10 and curving inwards with a smooth profile. Each of the arms is articulated to the respective carriage by a pivot 148 such that the arms can rotate inwards and outwards relative to the curvature of the track. One of the tensioning arms 146 has been shown cut away to reveal an internal coil spring 149, which acts between each arm 146 and the respective carriage 10 so that, on the curves, the arm is biased in an outward direction against the flexible link 120. The pre-compression of the springs 149 can be adjusted by means of respective pre-loading screws 150, thereby varying the outward force which the arms 146 exert on the links 120.

Additional means (not shown) will normally be provided for adjusting the pitch of the carriages.

As the carriages 10 move along straight sections of the track 2 the chain links 120 are substantially straight, and the arms 146 exert little or no lateral force on the chains 120. However, as the leading carriage enters a curved section of the track the advancing spring-loaded arm 146 exerts an increasing outward tensioning force on the opposing portion of the chain 120 urging the adjacent end of the link towards the outer margin of the track.

The action of the spring-loaded arms 146 on the links 120 ensures that the loop is always held in tension. Accurate spacing is maintained between adjacent carriages as they travel along straight portions of the track, but on curved sections a smooth reduction in the spacing between the carriages takes place with only a small increase in lateral forces acting on the carriages. The system dynamics allow considerably higher speed to be attained with a very low risk of fatigue failure.

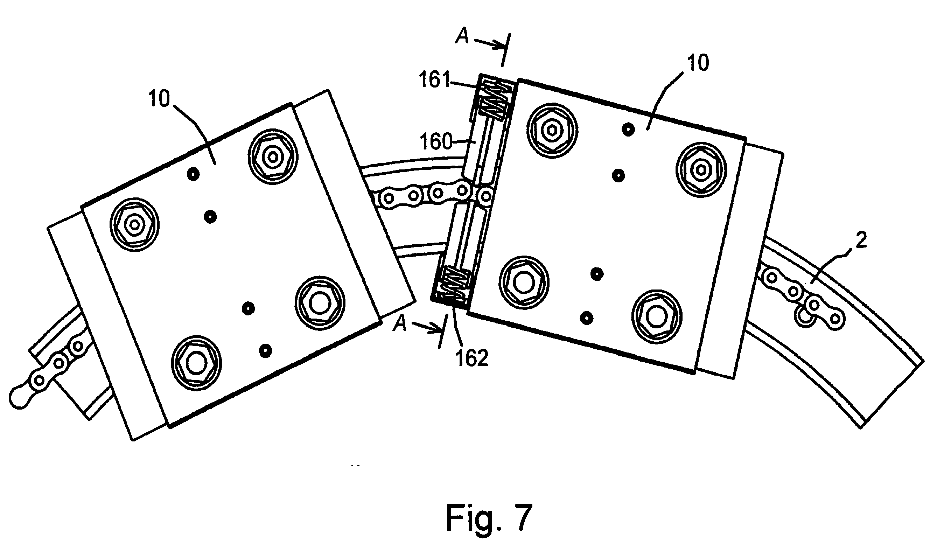

In a third embodiment of the driven track system which is shown in **Fig.s 7****,** **8 and 9**, dynamic tensioning is achieved by oppositely-acting compression springs which allow the link attachment points to dynamically shift in a direction which is transverse to that in which the carriages travel around the track. The driven track system has a horizontal endless track 2 which includes the curved portion shown in **Fig. 7**. Carriages 10 are engaged with the track 2 by means of wheels 11 with V-shaped grooves which engage V-shaped flanges on opposite sides of the track 2. The carriages are interconnected by lengths of chain 120 which are joined to opposite ends of the carriages 10 such that the carriages and links form an endless loop. The chain 120 comprises rigid plates joined by pivots to form flexible and non-extensible links between the adjacent carriages, but other forms of flexible inextensible element may be used, and in this embodiment even rigid links could be used satisfactorily.

The carriages are driven to move along the track, e.g. by a helical screw, hydraulic pushers, cam wheels or other suitable means, not shown.

The chain links 120 are joined to plungers 160 which are mounted at opposite ends of the carriages 10 to slide transversely of the track 2 without movement in the direction of travel around the track. As shown in the cut-away detail in **Fig. 7****,** the plungers 160 are biased between oppositely-acting compression springs 161 and 162 which are balanced to hold the plunger in a central position as the carriages move along straight portions of the track.

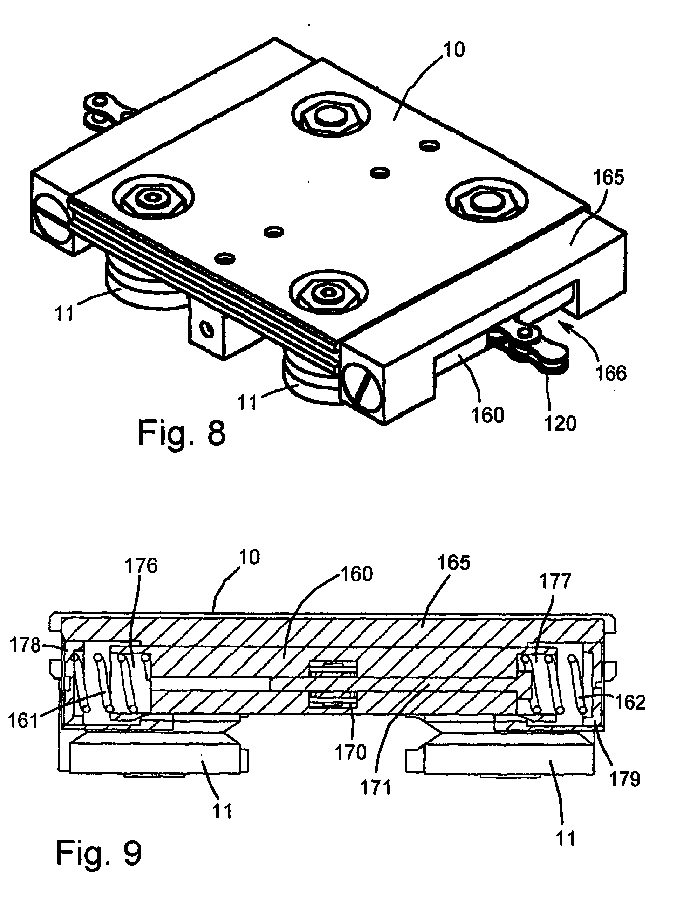

Referring to **Fig. 8**, the plungers 160 are slidably mounted within barrel housings 165 which are fixed with the opposite ends of the carriages 10. The barrels have openings 166 which allow the chains 120 to pass through with lateral clearance. As shown in the sectional detail of **Fig. 9****,** the chains are inserted through holes 170 in the centre of the plunger 160 and may be secured by retaining pins 171 inserted axially through the plunger. The coil springs 161 and 162 are received in bores 176 and 177 in opposite ends of the plunger, acting against respective adjustable pre-loading screws 178 and 179.

Additional means may be provided for adjusting the tension of the loop and the pitch of the carriages. The loop formed by the carriages 10 and links 120 is pre-tensioned so that on the curved regions of the track the link mounting points are caused to move inwards along the radius of curvature, compressing the inner spring 162 and allowing the opposing outer spring 161 to expand.

As the carriages 10 move along straight sections of the track 2 the chain links 120 are substantially straight, and the plungers 160 adopt a central balanced position. As each carriage enters a curved section of the track the advancing spring-loaded plunger moves radially to vary the spacing between the carriages whilst the loop remains in tension. The system dynamics allow high speeds to be attained with a very low risk of failure.

It will also be noted that with the embodiment described the track can include both inward and outward curves and the tension in the loop will still be maintained.

Whilst the above description places emphasis on the areas which are believed to be new and addresses specific problems which have been identified, it is intended that the features disclosed herein may be used in any combination which is capable of providing a new and useful advance in the art.

## Claims

1. A driven track system having:
- an endless track (2) incorporating one or more curved sections (5, 6);
- a plurality of carriages (10) engaged with the track such as to be capable of movement along the track;
- a plurality of non-extensible links (20; 120) each arranged to flexibly interconnect a pair of carriages such that the carriages and links form an endless loop; and
- drive means (30) arranged to act on at least some of the carriages at any given time such as to move the interconnected carriages around the track;
***characterised in that***
the carriages (10) are provided with resilient tensioning means (60; 149; 161, 162) arranged to act on the associated links (20; 120) such as to apply a tensioning force to each link transverse to the direction of movement as the carriages move around a curved portion of the track.

2. A driven track system according to Claim 1 in which the non-extensible links (20; 120) are flexible in a direction transverse to the track (2).

3. A driven track system according to Claim 2 in which the resilient tensioning means (60; 149; 161, 162) act on the links (20; 120) to deflect them transversely of the track (2).

4. A driven track system according to Claim 3 in which the resilient tensioning means (60; 149) act to deflect the links (20; 120) in an outward direction relative to the curvature of the track (2).

5. A driven track system according to any of claims 2 to 4 in which each carriage (10) includes a projecting element (46; 146) having a support face (47; 147) which is opposed to an associated link (20; 120).

6. A driven track system according to Claim 5 in which resilient tensioning means (149) acts on the projecting element (146) causing it to act on the associated link (120) to deflect it transversely of the track.

7. A driven track system according to Claim 6 in which the projecting element (146) is pivotally secured (149) to the associated carriage (10).

8. A driven track system according to any of Claims 2 to 5 in which the resilient tensioning means (60) act directly on the links (20) to deflect them in a direction transverse to the track.

9. A driven track system according to Claim 8 in which the resilient tensioning means (60) each comprise a leaf spring (60.1-60.5).

10. A driven track system according to Claim 9 in which the resilient tensioning means each comprise a compound leaf spring (60) assembly comprising a plurality of leaf springs (60.1-60.5).

11. A driven track system according to Claim 10 in which the leaf springs (60.1-60.5) are progressively shorter away from the associated link (20).

12. A driven track system according to any preceding claim in which each link (20) comprises a plurality of longitudinally-extending strands encapsulated within a flexible polymeric material.

13. A driven track system according to Claim 12 in which each link (20) has transversely extending ribs and grooves (22).

14. A driven track system according to Claim 13 in which each carriage (10) includes a gripper block (49) which is engaged with the ribs and grooves (22) of the associated link (20).

15. A driven track system according to Claim 14 in which the gripper block (49) is adjustably mounted (50) to vary the pitch of the carriages (10).

16. A driven track system according to any of Claims 1 to 11 in which each link (20) comprises a flexible metal element.

17. A driven track system according to any of Claims 1 to 11 in which each link (120) comprises a chain formed from a plurality of pivotally connected rigid elements.

18. A driven track system according to Claim 1 or 2 in which the resilient tensioning means (161, 162) act on the associated links (120) to permit their connections with the associated carriages (10) to move transversely of the track.

19. A driven track system according to Claim 18 in which the resilient tensioning means (161, 162) include attachment elements (160) to which the links (120) are fixed and which are constrained to move transversely of the track.

20. A driven track system according to Claim 19 in which the attachment elements (160) are disposed between oppositely-acting resilient elements (161, 162).
